# EUROPEAN PATENT SPECIFICATION

(11) **EP 2 438 346 B1**
(45) Date of publication and mention of the grant of the patent: **26.06.2013**
(21) Application number: 10763872.8
(22) Date of filing: 09.08.2010
(51) Int. Cl.: F17C 1/16, F17C 1/06, F17C 13/08

(54) **GAS CYLINDER**
GASZYLINDER
BOUTEILLE DE GAZ

(43) Date of publication of application: 11.04.2012
(73) Proprietor: Faber Industrie S.p.A., 33043 Cividale del Friuli Udine (IT)
(72) Inventor: COLA, Gian, Luigi, 30125 Venezia (IT)
(74) Representative: Leihkauf, Steffen Falk
(86) International application number: PCT/IT2010/000364
(87) International publication number: WO 2012/020435

(56) References cited:
- DE-U1-212009 000 005
- US-A- 3 446 385
- US-A1- 2004 056 164
- US-A1- 2007 077 470
- US-B1- 7 389 890

## Description

The object of the present invention is a gas cylinder made from synthetic or composite material for storing gas under pressure.
Known gas cylinders made from composite material usually comprise an inner layer, for example made from steel or synthetic material, which ensures the impermeability to the stored gas, and an outer layer made from composite material reinforced with fibres that ensures the mechanical resistance of the cylinder to the operating pressures, as well as a mouth that forms a through opening from the inside to the outside of the cylinder and a seat for receiving a valve for opening and closing the through opening.

The gases in the cylinders are classified as compressed gases if their critical temperature is below -50 °C like hydrogen or oxygen, as liquefied gases if the critical temperature is above -50 °C like LPG and as dissolved gases as for example acetylene in acetone.

The cylinders are intended for many uses and the standards for making them and testing them vary according to the application. Amongst the main applications of gas cylinders, we can quote the storage of liquefied or compressed gases for vehicular transport, domestic or industrial uses, the storage of compressed or liquefied gases for industrial use, holding tanks for compressed air, the storage of breathable mixtures for respirators, the storage of medical gases and fire extinguishers.

Thanks to the use of different materials for the functions of impermeabilising and mechanical resistance to pressure, composite gas cylinders have a very low weight/containment capacity ratio compared to steel gas cylinders. US2007/0077470 discloses a fuel cartridge with a deformable inner fuel container connectable to a fuel cell.

However, the relatively complex structure of composite gas cylinders and the interaction between the different material of the impermeabilising layer, of the reinforcing layer and of the mouth involve problems of sealing the cylinder and phenomena of deterioration of the synthetic materials and of the interface areas between the inner layer, the outer layer and the mouth, in particular in case of extended operating times.

Such structural and seal deterioration is worsened by the difference of the thermal expansion coefficients of the materials of the inner impermeabilisation layer and of the outer reinforcing layer (which are connected together over the entire surface), which involves a cyclical stressing of the two layers and by their interfacing due to the prevention of their free and independent thermal deformation.

The purpose of the present invention is therefore to provide a composite gas cylinder, having features such as to improve the impermeability in case of long operating periods and to avoid phenomena of structural deterioration with reference to the prior art.

This and other purposes are achieved through a gas cylinder internally defining a gas storage space able to be closed by a stop valve, wherein said cylinder comprises:
- a rigid wall made from composite material having a reinforcing layer containing reinforcing fibres and an inner surface that defines an inner space accessible through an access opening formed in the rigid wall,
- a tubular mouth able to be removably connected to the access opening of the rigid wall and configured to receive the stop valve in communication with the gas storage space,
- a flexible sealing wall arranged in the inner space and connected to the rigid wall only through the mouth, said flexible sealing wall internally defining the gas storage space and being suitable for adhering in pressing contact against the inner surface of the rigid wall,
wherein the rigid wall is permeable to air so as to allow a complete expansion of the flexible wall in the inner space and the inner surface is formed by a sliding layer of the rigid wall that is different from the reinforcing layer and that allows sliding in pressing contact between the flexible sealing wall and the rigid wall.

Thanks to the freedom of movement in pressing contact between the flexible sealing wall and the rigid wall and to their connection in a single area at the access opening of the rigid wall it is possible to avoid the phenomena of deterioration of the interfaces between the different layers and materials of the cylinder and the mouth, maintaining an excellent seal also in case of very long operating times.

Moreover, thanks to the removable connection of the mouth to the access opening of the rigid wall it is possible to replace the flexible sealing wall and gain access to the inner space of the rigid wall in order to inspect and regenerate the sliding layer.

In order to better understand the present invention and to appreciate its advantages, some non-limiting example embodiments will be described hereafter, with reference to the figures, in which:

figure 1 is a longitudinal section view of a gas cylinder according to one embodiment of the invention;

figure 2 is a partial longitudinal section view of a gas cylinder according to one further embodiment of the invention;

figure 3 is a partial longitudinal section view of a gas cylinder according to one further embodiment of the invention;

figures 4 and 5 illustrate cylinder spaces with gas cylinders according to figures 2 and 3;

figure 6 is a partial longitudinal section view of a gas cylinder according to one further embodiment of the invention;

figure 7 illustrates a cylinder space with gas cylinder according to figure 6;

figure 8 is a partial longitudinal section view of a gas cylinder according to one further embodiment of the invention.

With reference to the figures, a gas cylinder (hereafter "cylinder") is wholly indicated with reference numeral 1.

Cylinder 1 internally defines a gas storage space 2 able to be closed by a stop valve 3 and comprises a rigid outer wall 4 made from composite material that has a reinforcing layer 5 containing reinforcing fibres and an inner surface 6 that defines an inner space 7 accessible through an access opening 8. Such an access opening 8 preferably constitutes the only opening of the rigid outer wall 4 suitable for receiving a mouth for a valve and/or directly the valve.

In the present description of the invention, the term "composite material" denotes a material with a non-homogeneous structure, consisting of the assembly of two or more different substances, physically separated by a clear interface of zero thickness and equipped with substantially different physical and chemical properties that remain separate and distinct at macroscopic and structural level. In particular, the composite material may comprise fibres of natural or artificial materials, for example glass fibres, carbon fibres, ceramic fibres, aramid fibres, such as Kevlar®, embedded in a matrix made from a preferably but not necessarily synthetic material, for example thermoplastic like Nylon® and ABS or thermosetting like epoxy resins or polyester resin or metals, such as for example aluminium, titanium and alloys thereof or a ceramic material, generally silicon carbide or alumina.

According to one embodiment, the rigid wall 4 comprises a tubular portion 15, preferably substantially cylindrical and extending along a longitudinal axis L of the cylinder 1, a bottom portion 16, for example spherical or elliptical cap-shaped, which connects to a lower end of the tubular portion 15 and defines the inner space 7 on a lower side 17 of the cylinder 1, as well as an upper portion 18, for example shaped like an ogive, which connects to an upper end of the tubular portion 15 and defines the inner space 7 on an upper side 19 of the cylinder 1 opposite to the lower side 17.

Cylinder 1 further comprises a tubular mouth 9 able to be removably connected to the access opening 8 of the rigid wall 4 and configured to receive the stop valve 3 in communication with the gas storage space 2.

According to one embodiment, the mouth 9 may be made from synthetic or metallic material and may comprise a valve seat 10, for example a frusto-conical or cylindrical internal threading with a seat for a gasket, for the connection of the valve 10 in the mouth 9, as well as a cylinder connection portion 11, for example an external threading or a bayonet portion suitable for engaging a corresponding mouth connection seat 12 formed by the rigid wall 4 at the opening 8.

According to one embodiment, the connection seat 12 comprises a threading formed by the reinforcing layer 5 or a body 20 eventually threaded with many distinct pieces or in a monoblock removably connected (for example through screw clamping) with one edge of the opening 8 formed by the reinforcing layer 5 after its completion and setting. This facilitates and speeds up the winding process of the reinforcing layer and the entire assembly of the gas cylinder.

Alternatively, such a body 20 may be connected to the rigid wall through at least partial over-winding of the reinforcing layer.

The connection between the mouth 9 and the rigid wall 4 is configured to withstand the forces resulting from the pressure of the gas in the area of the opening 8, but it is not necessarily impermeable to gases and it could even be configured so as to create an area of programmed permeability of the rigid wall 4.

A flexible sealing wall 13, shaped like an inflatable bag impermeable to gases that are intended to be stored, is arranged in the inner space 7 and connected to the rigid wall 4 only through the mouth 9 and only at the mouth 9. The flexible sealing wall 13 internally defines the gas storage space 2 and is suitable for adhering in pressing contact against the inner surface 6 of the rigid wall 4.

According to one embodiment, in an undeformed state the flexible sealing wall 13 has a shape defined by a tubular portion 25, preferably substantially cylindrical and extending along a longitudinal axis L of the cylinder 1, a bottom portion 26, for example shaped like a spherical or elliptical cap, which connects to a lower end of the tubular portion 25 and defines the gas storage space 2 on the lower side 17 of the cylinder 1, as well as an upper portion 28, for example nose cone-shaped, which connected to an upper end of the tubular portion 25 and defines the gas storage space 2 on the upper side 19 of the cylinder 1 opposite the lower side 17.

According to one aspect of the invention, the rigid wall 4 is permeable to air so as to allow a complete expansion of the flexible sealing wall 13 in the inner space 7 and the inner surface 6 is formed by a sliding layer 14 of the rigid wall different from the reinforcing layer and that allows sliding in pressing contact between the flexible sealing wall 13 and the rigid wall 4. In one embodiment, the sliding layer 14 has no fibres. According to an alternative embodiment, the sliding layer 14 comprises a fabric that will be described later on.

Thanks to the freedom of movement in sliding contact between the flexible sealing wall and the rigid wall and their connection in a single area at the access opening of the rigid wall it is possible to avoid the phenomena of deterioration of the interfaces between the different layers and materials of the cylinder and the mouth, maintaining an excellent seal also in case of very long operating times.

Moreover, thanks to the removable connection of the mouth to the access opening of the rigid wall it is possible to replace the flexible sealing wall and gain access to the inner space of the rigid wall in order to inspect and regenerate the sliding layer.

The rigid outer wall 4 performs the function of withstanding the internal pressure exerted by the stored gas and it may be manufactured through winding filaments of continuous carbon fibres impregnated with epoxy resin on a mandrel. The mandrel itself may then be removed, for example through dissolving, mechanical crumbling or disassembly in the case of a mandrel in many pieces.

Alternatively, the mandrel around which the reinforcing layer 5 is wound stays integrated in the rigid wall 4 and forms a layer thereof, for example the aforementioned sliding layer 14 or an intermediate layer (not illustrated) between the reinforcing layer 5 and the sliding layer 13.

The reinforcing fibres of the reinforcing layer 5 have a tensile strength of over 4500 MPa, preferably from 4800 MPa to 5200 MPa and a modulus of elasticity of over 200 GPa, preferably from 200 to 250 GPa.

Advantageously, the reinforcing layer 5 comprises a content (volumetric) of reinforcing fibres within the range from 50%vol to 70%vol, preferably from 55%vol to 65%vol, even more preferably of about 60%vol, in which the rest of the volume is formed by the matrix that may be an epoxy or vinyl ester resin made to set through a heat treatment, for example heating to about 120° lasting about 5 hours.

The sliding layer 14 advantageously has a smooth exposed surface without edges or steps (with the exception of the edge of the preferably single access opening 8) and it may comprise a synthetic material, preferably thermoplastic, for example selected from the group comprising polyethylene, polyester, PET (polyethylene terephthalate), polyvinylchloride, polytetrafluoroethylene. In accordance with an embodiment, the sliding layer 14 comprises a fabric of fibres or natural or synthetic filaments, for example made from polyester, which may be further coated or directly exposed in the inner space 7.

Alternatively or additionally, the sliding layer 14 may comprise a fluid, for example lubricant gel or grease, or a lubricant powder containing for example nano-particles suitable for reducing the friction coefficient between the rigid wall 4 and the flexible sealing wall 13.

The sliding layer 14 may be fixed to the rigid wall 4 through:
- blow-moulding in a mould consisting of the reinforcing layer 5 with one or more optional intermediate layers and/or
- moulding of the sliding layer 14 (for example through a different mould from the reinforcing layer) and subsequent winding of the reinforcing layer 5 around the sliding layer 14 and/or
- spraying and/or
- dip coating that in the present case provides for the temporary filling of the inner space 7 with a coating liquid or with a coating powder that deposits the sliding layer 14 on the semi-worked product of the rigid wall 4.

The flexible sealing wall 13 is configured like a deformable bag, for example made from rubber, and it has a (preferably single) opening connected to the mouth 9, for example through fusion, vulcanization, co-moulding, gluing or mechanically through crimping or screw clamping, so as to advantageously form a sealing wall 13 - mouth 9 group that is prefabricated and able to be (preferably removably) connected to the rigid wall 4. As already stated earlier, the sealing wall 13 - mouth 9 group may be removable and replaceable.

According to an alternative embodiment, structurally very simple and cost-effective but less versatile, the mouth 9 with the flexible sealing wall 13 are directly incorporated in the mandrel during the winding of the reinforcing layer 5 of the rigid wall 4 and are irreversibly connected to such a rigid wall 4.

According to a further aspect of the present invention, the tubular portion 15 of the rigid wall 4 comprises at least one first widened tubular section 21 and at least one second tubular section 22 that is adjacent to and narrower than the first widened tubular section 21.

Thanks to the widened tubular section 21 adjacent to the narrow tubular section 22 it is possible to receive clamps or locking brackets in the narrow tubular section 22 and exploit the areas adjacent to the locking brackets for the storage of the gas.

Thanks to the separation of the flexible sealing wall from the non-cylindrical rigid wall and to the possibility of sliding in pressing contact between them, the variations in diameters of the rigid wall cannot form areas of potential permeability of the sealing wall. In this way, it is possible to reconcile the contrasting requirements of seal and of walls of irregular shape.

Advantageously, the tubular portion 25 of the flexible sealing wall 13 does not present, in the state not inflated by the pressure of the gas narrow tubular sections adjacent to widened tubular sections or, in other words, in the non-inflated state, the shape of the tubular portion 25 of the flexible sealing wall 13 does not follow the outline or the shape of the tubular portion 15 of the rigid wall 4.

This makes it possible to manufacture, stock and use few ranges of flexible sealing walls for a large number of variants of gas cylinders with rigid walls of different shapes.

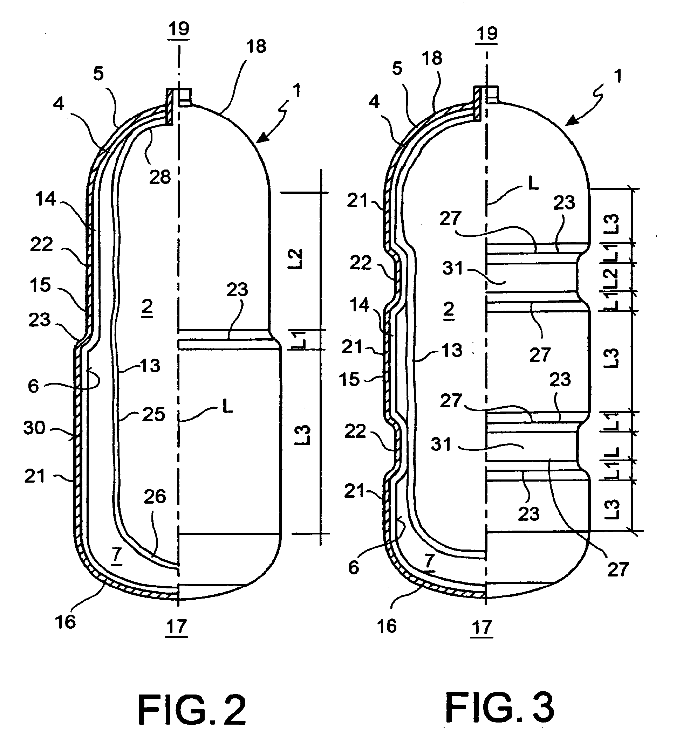

In accordance with a further aspect of the present invention (fig. 3), the narrow sections 22 form a plurality of preferably two annular necks each of which is defined on both sides by respective widened tubular sections 21.

This particular configuration of the cylinder allows a correct positioning of the locking clamps and prevents them from accidentally sliding in the longitudinal direction L of the gas cylinder 1.

In order to best reconcile the requirements of stressing the tubular portion 15 as much as possible as a "tight membrane" and of it having a non-cylindrical shape such as to exploit to the maximum the available space for storing the gas, the narrow section 22 or, preferably, all of the narrow sections 22 respectively form a circular cylindrical central ring 31 having a constant diameter along the longitudinal axis L and two side transition rings 27 that connect the central ring 31 to the adjacent widened tubular sections 21, forming a circumferential step.

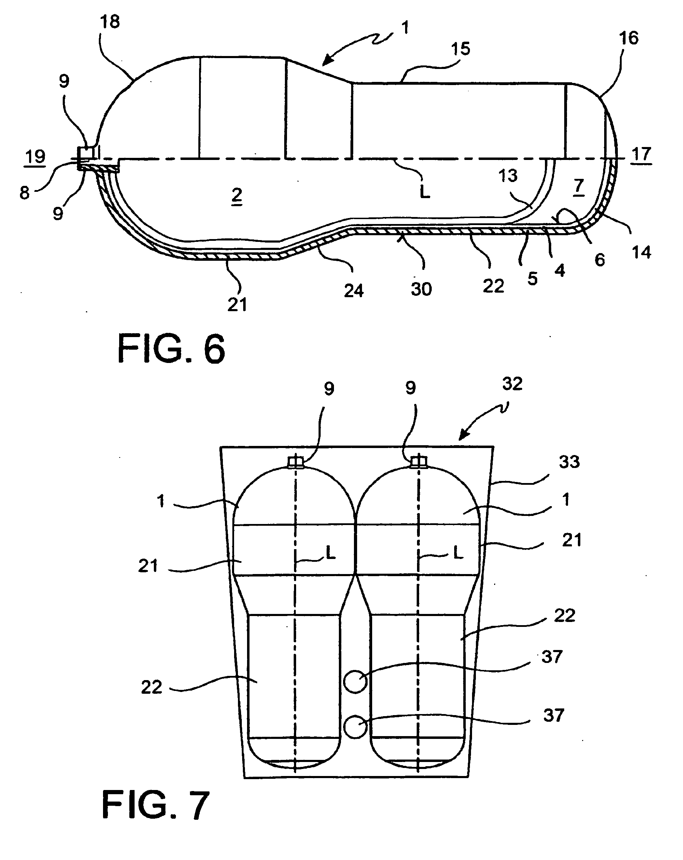

Advantageously, the side rings 27, in a longitudinal section plane that comprises the longitudinal axis L, have a shape with double curvature (fig. 2) or frustum of cone 24 (fig. 6) and a longitudinal extension L1 shorter than the longitudinal extension L2 of the cylindrical central ring 31. In order to reduce the flexional stresses of the narrowed areas it is advantageous to provide for the longitudinal extension L2 of the central ring to be shorter than the sum of the longitudinal extensions L1 of the side rings, i.e. L2<2L1.

The widened tubular sections 21 also preferably form one or more circular cylindrical rings with constant diameter along the longitudinal axis L of the cylinder 1.

In accordance with an embodiment (Fig. 2), the tubular portion 15 forms a single first widened section 21 and a single second narrow section 22 adjacent to the widened section 21 and separated from it by an internally bevelled circumferential step 23 or by an internally bevelled frusto-conical joint 24, formed by a single side ring 27 of the narrow section 22 that may be shaped as described earlier.

In this way, the gas cylinder 1 has an overall shape tapered with a step that allows it to be fixed through one or more locking brackets in the tapered area without leaving unused spaces in the cylinder space of the application, for example a gas-powered vehicle.

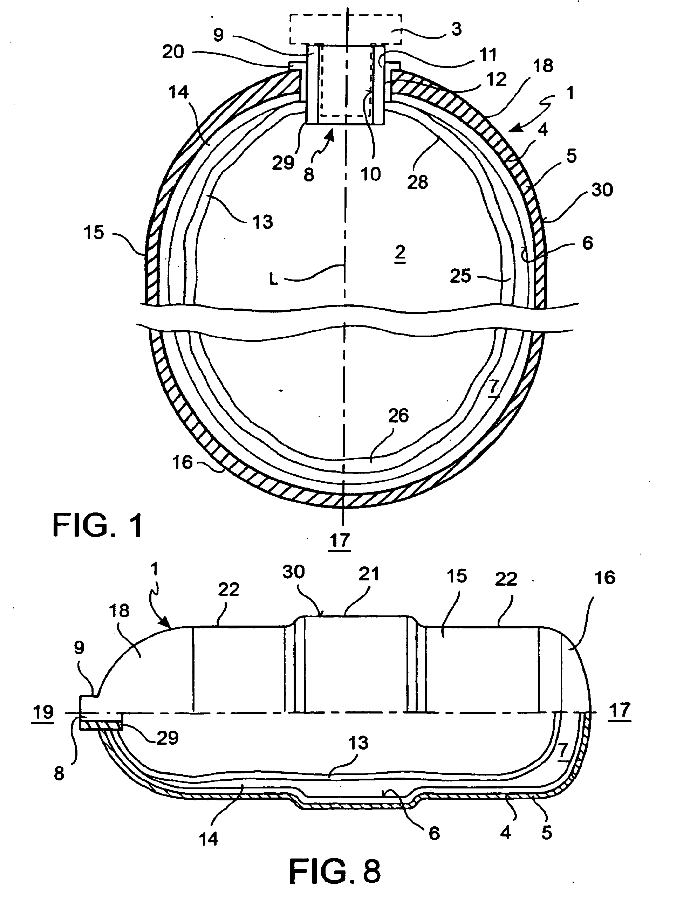

In accordance with a further aspect of the present invention (fig. 8), two narrow sections 22 form respectively an upper section and a lower section of the tubular portion 15, between which a widened tubular section 21 extends forming an intermediate section. preferably substantially central, of such a tubular portion 15.

As visible from the figures, the thickness of the tubular portion 15 of the rigid wall 4 does not substantially vary, in other words the inner surface 6 of the rigid wall 4, in the area of the tubular portion 15, substantially follows the shape of its outer surface 30, so that the shaping of the tubular portion 15 to the external space conditions translate into a maximisation of the gas storage space 2 inside the cylinder 1.

According to a further aspect of the present invention (Figure 8), advantageously able to be made in combination with single or all of the characteristics described up to here, the mouth 9 of the gas cylinder 1 comprises an internally threaded inner portion 29 projecting inside the gas storage space 2 defined by the flexible sealing wall 13.

Thanks to the configuration of the threaded mouth 9 that at least partially projects inside the gas storage space 2, it is possible to also exploit at least one part of the cylinder height, in any case necessary to screw in the stop valve, to store the gas.

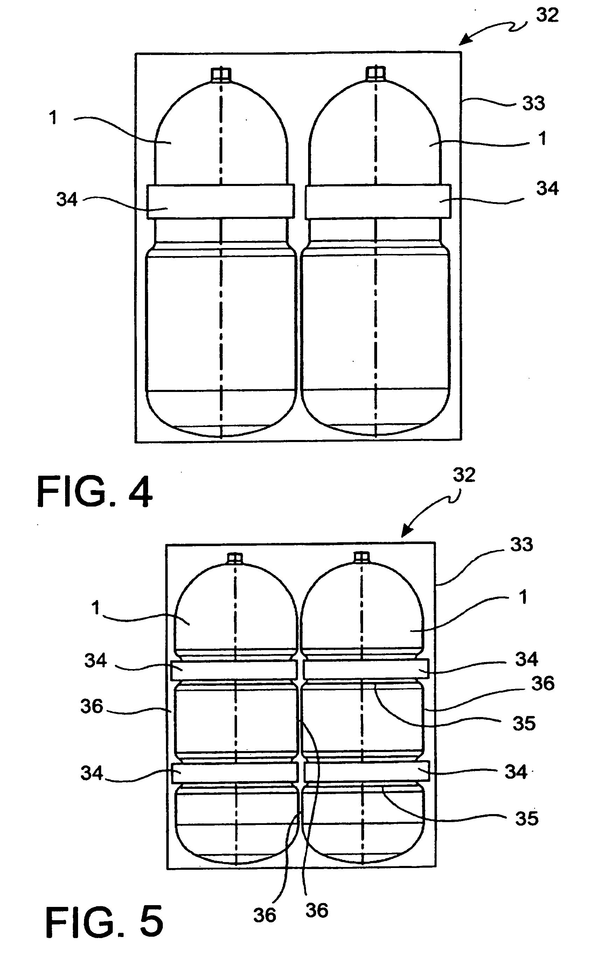

Figures 4 and 5 illustrate embodiments of cylinder space - cylinder groups 32 for gas applications, for example vehicles. The cylinder space - cylinder group 32 comprises one or more gas cylinders 1 according to what has been described previously, a support and containment structure 33 able to be fixed to or formed at a bearing structure of the application (for example of a vehicle) and configured to at least partially receive such gas cylinders, as well as one or more locking members 34, preferably clamps or locking brackets, anchored or able to be anchored to the support and containment structure 33 and suitable for at least partially wrapping around said gas cylinders 1 to lock them to the support and containment structure 33. Such locking members 34 have at least one portion received in a circumferential seat 35 formed by the narrow section 22 in the outer surface 30 of the gas cylinder 1. Moreover, at least one of the widened sections 21 of the tubular portion 15 of the rigid wall 4 extends in a gap 36 (otherwise unused), defined between two locking members 34 or between a locking member 34 and the support and containment structure 33.

Figure 7 illustrates a further cylinder space - cylinder group 32, in which the support and containment structure 33 comprises side walls inclined with respect to one another and/or interruptions due to functional elements 37 (for example reinforcing stays or tubes) and the cylinder(s) 1 adapt to the shape of the containment structure 33 thanks to the presence of the widened and narrow sections 21, 22.

Of course, a man skilled in the art may bring further modifications and variants to the gas cylinder made from composite material and to the cylinder space-gas cylinder group according to the present invention, in order to satisfy contingent and specific requirements, all of which are covered by the scope of protection of the invention, as defined by the following claims.

## Claims

1. Gas cylinder (1) internally defining a gas storage space (2) able to be closed by a stop valve (3), wherein said cylinder (1) comprises:
- a rigid wall (4) made from composite material having a reinforcing layer (5) containing reinforcing fibres and an inner surface (6) that defines an inner space (7) accessible through an access opening (8) formed in the rigid wall (4).
- a tubular mouth (9) connected to the access opening (8) of the rigid wall (4) and configured to receive the stop valve (3) in communication with the gas storage space (2),
- a flexible sealing wall (13) arranged in the inner space (7) and connected to the rigid wall (4) only through the mouth (9), said flexible sealing wall (13) internally defining said gas storage space (2) and being suitable for adhering in pressing contact against the inner surface (6) of the rigid wall (4),
wherein the rigid wall (4) is permeable to air so as to allow a complete expansion of the flexible wall (13) in the inner space (7), **characterized in that** the inner surface (6) is formed by a sliding layer (14) of the rigid wall (4) different from the reinforcing layer (5) and that allows sliding in pressing contact between the flexible sealing wall (13) and the rigid wall (4).

2. Gas cylinder (1) according to claim 1, wherein the mouth (9) comprises a cylinder connection portion (11) suitable for removably engaging a mouth connection seat (12) formed by the rigid wall (4) at the opening (8).

3. Gas cylinder (1) according to claim 1, wherein the mouth (9) comprises a cylinder connection portion (11) suitable for removably engaging a mouth connection seat (12) formed by a body (20) initially distinct and then connected with the rigid wall (4).

4. Gas cylinder (1) according to any one of the previous claims, wherein the reinforcing fibres of the reinforcing layer (5) have a tensile strength of over 4500 MPa and a modulus of elasticity of over 200 GPa and wherein said reinforcing layer (5) comprises a content of reinforcing fibres within the range from 50%vol to 70%vol, preferably from 55%vol to 65%vol, even more preferably about 60%vol.

5. Gas cylinder (1) according to any one of the previous claims, wherein said inner surface (6) is smooth and without edges or steps, with the exception of the edge of the access opening (8).

6. Gas cylinder (1) according to any one of the previous claims, wherein said sliding layer (14) comprises a thermoplastic synthetic material selected from the group comprising polyethylene, PET, polyester, polyvinylchloride, polytetrafluoroethylene.

7. Gas cylinder (1) according to any one of the previous claims, wherein said sliding layer (14) comprises a substance selected from the group consisting of:
- lubricant powder containing nano-particles suitable for reducing the friction coefficient between the rigid wall (4) and the flexible sealing wall (13).
- lubricant fluid,
- lubricant grease,
- lubricant oils,
- lubricant gels.

8. Gas cylinder (1) according to any one of the previous claims, wherein the sliding layer (14) is fixed to the reinforcing layer (5) by means of moulding of the sliding layer (14) and subsequent winding of the reinforcing layer (5) around the sliding layer (14).

9. Gas cylinder (1) according to any one of the previous claims, wherein the sliding layer (14) is fixed to the reinforcing layer (5) by means of blow-moulding in a mould containing said reinforcing layer (5).

10. Gas cylinder (1) according to any one of the previous claims, wherein the sliding layer (14) is fixed to the reinforcing layer (5) by means of spraying.

11. Gas cylinder (1) according to any one of the previous claims, wherein the sliding layer (14) is fixed to the reinforcing layer (5) by means of dip coating.

12. Gas cylinder (1) according to any one of the previous claims, wherein the flexible sealing wall (13) forms a deformable bag with an opening connected to the mouth (9) so as to form a sealing wall (13) - mouth (9) group that is prefabricated and able to be reversibly connected to the rigid wall (4).

13. Gas cylinder (1) according to any one of the previous claims, wherein the flexible sealing wall (13) is connected to the mouth (9) through connection means selected from the group comprising:
- vulcanized join,
- co-moulded join.
- gluing,
- mechanical join through crimping or screw clamping.

14. Gas cylinder (1) according to claim 1, wherein the mouth (9) with the flexible sealing wall (13) are irreversibly connected to such a rigid wall (4).

15. Gas cylinder (1) according to any one of the previous claims, wherein said sliding layer (14) comprises a fabric.

16. Gas cylinder (1) according to any one of the previous claims, wherein the rigid wall (4) comprises a tubular portion (15) with at least one widened first tubular section (21) and at least one second tubular section (22) adjacent to and narrower than the first tubular section (21).

17. Gas cylinder (1) according to claim 15, wherein said flexible sealing wall (13) has a shape that, in the deflated state, is incompatible with the shape of the tubular portion (15) of the rigid wall (4) and, in the inflated state, adapts to the shape of the rigid wall (4).

18. Cylinder space - gas cylinder group (32), comprising:
- one or more gas cylinders (1) according to one of claims 16 and 17,
- a support and containment structure (33) able to be fixed to a bearing structure of an application and configured to at least partially receive said gas cylinders (1),
- one or more locking members (34) anchored to the support and containment structure (33) and suitable for at least partially wrapping around said gas cylinders (1) so as to lock them to the support and containment structure (33),
wherein said locking members (34) are partially received in a circumferential seat (35) of the gas cylinder (1) formed by its narrow portion (22) and the widened portion (21) extends into a gap (36) defined by the locking member (34) and the support and containment structure (33).

## Patentansprüche

1. Gaszylinder (1), welcher in seinem Inneren einen Gasspeicherraum (2) definiert, der mittels eines Stoppventils geschlossen werden kann, wobei der Gaszylinder (1) umfasst:
- eine aus Verbundwerkstoff hergestellte starre Wand (4), welche eine Verstärkungsfasern enthaltende verstärkende Schicht (5) und eine Innenfläche (6) aufweist, die einen Innenraum (7) definiert, der über eine in der starren Wand (4) gebildete Zugangsöffnung (8) zugänglich ist,
- einen zylinderförmigen Eingang (9), welcher mit der Zugangsöffnung (8) der starren Wand (4) verbunden ist und dazu eingerichtet ist, das mit dem Gasspeicherraum (2) in Verbindung stehende Stoppventil (3) aufzunehmen,
- eine flexible Abdichtungswand (13), welche in dem Innenraum (7) angeordnet ist und mit der starren Wand (4) nur über den Eingang (9) verbunden ist, wobei die flexible Abdichtungswand (13) in ihrem Inneren den Gasspeicherraum (2) definiert und dazu geeignet ist, in Presskontakt an der Innenfläche (6) der starren Wand (4) anzuhaften, wobei die starre Wand (4) luftdurchlässig ist, um eine vollständige Ausdehnung der flexiblen Wand (13) in dem Innenraum (7) zu erlauben, **dadurch gekennzeichnet, dass** die Innenfläche (6) durch eine Gleitschicht (14) der starren Wand (4) gebildet ist, welche sich von der verstärkenden Schicht (5) unterscheidet und welche ein Gleiten in Presskontakt zwischen der flexiblen Abdichtungswand (13) und der starren Wand (4) erlaubt.

2. Gaszylinder (1) nach Anspruch 1, wobei der Eingang (9) einen Zylinderverbindungsabschnitt (11) umfasst, welcher zum lösbaren Eingreifen mit einem durch die starre Wand (4) bei der Öffnung (8) gebildeten Eingangsverbindungssitz (12) geeignet ist.

3. Gaszylinder (1) nach Anspruch 1, wobei der Eingang (9) einen Zylinderverbindungsabschnitt (11) umfasst, welcher zum lösbaren Eingreifen eines Eingangsverbindungssitzes (12) geeignet ist, der durch einen anfangs getrennten und dann mit der starren Wand (4) verbundenen Körper (20) gebildet ist.

4. Gaszylinder (1) nach einem der vorhergehenden Ansprüche, wobei die Verstärkungsfasern der verstärkenden Schicht (5) eine Zugfestigkeit von über 4500 MPa und ein Elastizitätsmodul von über 200 GPa aufweisen und wobei die verstärkende Schicht (5) einen Gehalt an Verstärkungsfasern in der Spanne von 50vol% bis 70vol%, bevorzugt von 55vol% bis 65vol%, besonders bevorzugt von etwa 60vol% umfasst.

5. Gaszylinder (1) nach einem der vorhergehenden Ansprüche, wobei die Innenfläche (6) glatt und ohne Kanten oder Stufen ist, mit der Ausnahme der Kante der Zugangsöffnung (8).

6. Gaszylinder (1) nach einem der vorhergehenden Ansprüche, wobei die Gleitschicht (14) ein thermoplastisches Synthetikmaterial umfasst, welches von der Gruppe ausgewählt ist, die Polyethylen, PET, Polyester, Polyvinylchlorid, Polytetrafluorethylen umfasst.

7. Gaszylinder (1) nach einem der vorhergehenden Ansprüche, wobei die Gleitschicht (14) eine Substanz umfasst, welche aus der Gruppe ausgewählt ist, welche zusammengesetzt ist aus:
- Gleitmittelpulver, welches Nanopartikel enthält, die zum Reduzieren des Reibungskoeffizienten zwischen der starren Wand (4) und der flexiblen Abdichtungswand (13) geeignet sind,
- Gleitmittelfluid,
- Gleitmittelfett,
- Gleitmittelöle,
- Gleitmittelgele.

8. Gaszylinder (1) nach einem der vorhergehenden Ansprüche, wobei die Gleitschicht (14) an der verstärkenden Schicht (5) durch Formen der Gleitschicht (14) und anschließendem Wickeln der verstärkenden Schicht (5) um die Gleitschicht (14) fixiert ist.

9. Gaszylinder (1) nach einem der vorhergehenden Ansprüche, wobei die Gleitschicht (14) an der verstärkenden Schicht (5) durch Blasformen in einer die verstärkende Schicht (5) enthaltende Form fixiert ist.

10. Gaszylinder (1) nach einem der vorhergehenden Ansprüche, wobei die Gleitschicht (14) durch Sprühen an der verstärkenden Schicht (5) fixiert ist.

11. Gaszylinder (1) nach einem der vorhergehenden Ansprüche, wobei die Gleitschicht (14) durch Tauchbeschichtung an der verstärkenden Schicht (5) fixiert ist.

12. Gaszylinder (1) nach einem der vorhergehenden Ansprüche, wobei die flexible Abdichtungswand (13) einen deformierbaren Beutel mit einer mit dem Eingang (9) verbundenen Öffnung bildet, um eine Abdichtungswand (13) - Eingang (9)-Gruppe zu bilden, die vorgefertigt ist und dazu in der Lage ist, reversibel mit der starren Wand (4) verbunden zu sein.

13. Gaszylinder (1) nach einem der vorhergehenden Ansprüche, wobei die flexible Abdichtungswand (13) mit dem Eingang (9) über Verbindungsmittel verbunden ist, die ausgewählt sind aus der Gruppe umfassend:
- vulkanisierte Verbindung,
- zusammen gegossene Verbindung,
- Kleben,
- mechanische Verbindung durch Bördeln oder Schraubzwingen.

14. Gaszylinder (1) nach Anspruch 1, wobei der Eingang (9) mit der flexiblen Abdichtungswand (13) irreversibel mit einer solchen starren Wand (4) sind.

15. Gaszylinder (1) nach einem der vorhergehenden Ansprüche, wobei die Gleitschicht (14) ein Gewebe umfasst.

16. Gaszylinder (1) nach einem der vorhergehenden Ansprüche, wobei die starre Wand (4) einen zylinderförmigen Abschnitt (15) mit wenigstens einem geweiteten ersten zylinderförmigen Bereich (21) und wenigstens einem zweiten zylinderförmigen Bereich (22), welcher dem ersten zylinderförmigen Bereich (21) benachbart ist und enger als dieser ist, umfasst.

17. Gaszylinder (1) nach Anspruch 15, wobei die flexible Abdichtungswand (13) eine Form aufweist, welche im entleerten Zustand inkompatibel mit der Form des zylinderförmigen Abschnitts (15) der starren Wand (4) ist und sich im aufgeblasenen Zustand der Form der starren Wand (4) anpasst.

18. Zylinderraum - Gaszylinder-Gruppe (32), umfassend:
- einen oder mehrere Gaszylinder (1) nach einem der Ansprüche 16 und 17,
- eine Abstütz- und Aufnahmestruktur (33), welche an einer Halterungsstruktur einer Anwendung fixiert werden kann und dazu eingerichtet ist, wenigstens teilweise die Gaszylinder (1) aufzunehmen,
- ein oder mehrere Verriegelungselemente (34), welche an der Abstütz - und Aufnahmestruktur (33) verankert sind und zum wenigstens teilweisen Umgreifen der Gaszylinder (1) geeignet sind, um sie mit der Abstütz- und Aufnahmestruktur (33) zu verriegeln,
wobei die Verriegelungselemente (34) teilweise in einem Umfangssitz (35) des Gaszylinders (1) aufgenommen sind, welcher durch seinen engen Abschnitt (22) gebildet ist und wobei sich der geweitete Abschnitt (21) in eine Lücke (36) erstreckt, die von dem Verriegelungselement (34) und der Abstütz- und Aufnahmestruktur (33) definiert ist.

## Revendications

1. Bouteille de gaz (1) définissant intérieurement un espace de stockage de gaz (2) qui peut être fermé par une vanne d'arrêt (3), dans laquelle ladite bouteille (1) comprend :
- une paroi rigide (4) réalisée à partir d'un matériau composite comportant une couche de renforcement (5) contenant des fibres de renforcement et une surface intérieure (6) qui définit un espace intérieur (7) accessible à travers une ouverture d'accès (8) formée dans la paroi rigide (4),
- un goulot tubulaire (9) relié à l'ouverture d'accès (8) de la paroi rigide (4) et configuré pour recevoir la vanne d'arrêt (3) en communication avec l'espace de stockage de gaz (2),
- une paroi d'étanchéité souple (13) agencée dans l'espace intérieur (7) et reliée à la paroi rigide (4) uniquement par l'intermédiaire du goulot (9), ladite paroi d'étanchéité souple (13) définissant intérieurement ledit espace de stockage de gaz (2) et étant appropriée pour adhérer en contact par pression contre la surface intérieure (6) de la paroi rigide (4),
dans laquelle la paroi rigide (4) est perméable à l'air de manière à permettre une expansion complète de la paroi souple (13) dans l'espace intérieur (7), **caractérisée en ce que** la surface intérieure (6) est formée par une couche de glissement (14) de la paroi rigide (4) différente de la couche de renforcement (5) et qui permet un glissement en contact par pression entre la paroi d'étanchéité souple (13) et la paroi rigide (4).

2. Bouteille de gaz (1) selon la revendication 1, dans laquelle le goulot (9) comprend une partie de liaison de bouteille (11) appropriée pour venir en prise de manière amovible avec un siège de liaison de goulot (12) formé par la paroi rigide (4) au niveau de l'ouverture (8).

3. Bouteille de gaz (1) selon la revendication 1, dans laquelle le goulot (9) comprend une partie de liaison de bouteille (11) appropriée pour venir en prise de manière amovible avec un siège de liaison de goulot (12) formé par un corps (20) initialement distinct et relié ensuite à la paroi rigide (4).

4. Bouteille de gaz (1) selon l'une quelconque des revendications précédentes, dans laquelle les fibres de renforcement de la couche de renforcement (5) ont une résistance à la traction supérieure à 4500 MPa et un module d'élasticité supérieur à 200 GPa, et dans laquelle ladite couche de renforcement (5) a une teneur en fibres de renforcement dans la plage de 50 % en volume à 70 % en volume, de préférence de 55 % en volume à 65 % en volume, encore plus préférablement d'environ 60 % en volume.

5. Bouteille de gaz (1) selon l'une quelconque des revendications précédentes, dans laquelle ladite surface intérieure (6) est lisse et sans bords ou épaulements, à l'exception du bord de l'ouverture d'accès (8).

6. Bouteille de gaz (1) selon l'une quelconque des revendications précédentes, dans laquelle ladite couche de glissement (14) comprend une matière synthétique thermoplastique sélectionnée dans le groupe comprenant le polyéthylène, le PET, le polyester, le polychlorure de vinyle, le polytétrafluoroéthylène.

7. Bouteille de gaz (1) selon l'une quelconque des revendications précédentes, dans laquelle ladite couche de glissement (14) comprend une substance sélectionnée dans le groupe consistant en :
- une poudre lubrifiante contenant des nanoparticules appropriées pour réduire le coefficient de frottement entre la paroi rigide (4) et la paroi d'étanchéité souple (13),
- un fluide lubrifiant,
- une graisse lubrifiante,
- des huiles lubrifiantes,
- des gels lubrifiants.

8. Bouteille de gaz (1) selon l'une quelconque des revendications précédentes, dans laquelle la couche de glissement (14) est fixée à la couche de renforcement (5) par un moulage de la couche de glissement (14) et par un enroulement subséquent de la couche de renforcement (5) autour de la couche de glissement (14).

9. Bouteille de gaz (1) selon l'une quelconque des revendications précédentes, dans laquelle la couche de glissement (14) est fixée à la couche de renforcement (5) par un moulage par extrusion-soufflage dans un moule contenant ladite couche de renforcement (5).

10. Bouteille de gaz (1) selon l'une quelconque des revendications précédentes, dans laquelle la couche de glissement (14) est fixée à la couche de renforcement (5) par pulvérisation.

11. Bouteille de gaz (1) selon l'une quelconque des revendications précédentes, dans laquelle la couche de glissement (14) est fixée à la couche de renforcement (5) par dépôt par immersion.

12. Bouteille de gaz (1) selon l'une quelconque des revendications précédentes, dans laquelle la paroi d'étanchéité souple (13) forme un sac déformable avec une ouverture reliée au goulot (9) de manière à former un groupe paroi d'étanchéité (13) - goulot (9) qui est préfabriqué et qui peut être relié de manière réversible à la paroi rigide (4).

13. Bouteille de gaz (1) selon l'une quelconque des revendications précédentes, dans laquelle la paroi d'étanchéité souple (13) est reliée au goulot (9) par l'intermédiaire de moyens de liaison sélectionnés dans le groupe comprenant :
- un joint vulcanisé,
- un joint moulé conjointement,
- un collage,
- un joint mécanique par un sertissage ou un serrage par vis.

14. Bouteille de gaz (1) selon la revendication 1, dans laquelle le goulot (9) avec la paroi d'étanchéité souple (13) sont reliés de manière irréversible à une telle paroi rigide (4).

15. Bouteille de gaz (1) selon l'une quelconque des revendications précédentes, dans laquelle ladite couche de glissement (14) comprend un tissu.

16. Bouteille de gaz (1) selon l'une quelconque des revendications précédentes, dans laquelle la paroi rigide (4) comprend une partie tubulaire (15) avec au moins une première section tubulaire élargie (21) et au moins une deuxième section tubulaire (22) adjacente à et plus étroite que la première section tubulaire (21).

17. Bouteille de gaz (1) selon la revendication 15, dans laquelle ladite paroi d'étanchéité souple (13) a une forme qui, dans l'état dégonflé, est incompatible avec la forme de la partie tubulaire (15) de la paroi rigide (4) et, dans l'état gonflé, adopte la forme de la paroi rigide (4).

18. Groupe espace de bouteille - bouteille de gaz (32), comprenant :
- une ou plusieurs bouteilles de gaz (1) selon l'une des revendications 16 et 17,
- une structure de support et de confinement (33) qui peut être fixée à une structure de support d'une application et configurée pour recevoir au moins partiellement lesdites bouteilles de gaz (1),
- un ou plusieurs éléments de blocage (34) ancrés à la structure de support et de confinement (33) et appropriés pour s'enrouler au moins partiellement autour desdites bouteilles de gaz (1) de manière à les bloquer sur la structure de support et de confinement (33),
dans lequel lesdits éléments de blocage (34) sont partiellement reçus dans un siège circonférentiel (35) de la bouteille de gaz (1) formé par sa partie étroite (22), et la partie élargie (21) s'étend dans un espace (36) défini par l'élément de blocage (34) et la structure de support et de confinement (33).
